# EUROPEAN PATENT APPLICATION

(11) **EP 4 417 586 A1**
(43) Date of publication of application: **21.08.2024**
(21) Application number: 23157457.5
(22) Date of filing: 20.02.2023
(51) Int. Cl.: C04B 18/04, C04B 28/08

(54) **CONSTRUCTION MATERIALS BASED ON BINDERS COMPRISING STEELMAKING SLAG**

(71) Applicant: Sika Technology AG, 6340 Baar (CH)
(72) Inventor: SOUDIER, Jerome, 01150 Vaux en Bugey (FR); MARTIN, Charlene, 38080 Four (FR); LEVESQUE, Olivier, 38600 Crémieu (FR)
(74) Representative: Sika Patent Attorneys

(57) **Abstract**

The present invention relates to construction materials based on binders comprising steelmaking slag, especially basic oxygen slag, at least one accelerator for the reaction of said steelmaking slag with water, at least one co-binder, aggregate and/or filler, and admixtures. The present invention also relates to uses of construction materials as tile adhesive, a grouting mortar, a repair mortar, a masonry mortar, a waterproofing mortar, an anchoring mortar, a render, a screed, a self-levelling underlayment or self-levelling overlayment, a thin joint mortar, or a wall levelling compound.

## Description

### Technical Field

The present invention relates to construction materials based on binders comprising steelmaking slag, especially basic oxygen slag.

### Background of the invention

Cement-based building materials, especially concrete or mortars, rely on cementitious materials as binders. Cementitious binders typically are mineral, hydraulic binders the most abundant of which are cements and especially Ordinary Portland Cement (OPC). However, the use of cements and especially of Ordinary Portland Cement has a high environmental footprint. One major reason are the high CO₂ emissions associated with the manufacture of cements. Many efforts have thus been made to at least partially replace cements as binders from building materials.

One possibility is the use of materials with cementitious properties, pozzolanes and/or latent hydraulic materials as cement replacement. An especially appealing material of this kind is slag as it is available as a by-product of various metallurgical process, especially iron and steelmaking, in large quantities.

One specific type of slag is steelmaking slag is converter slag, also called Basic Oxygen Furnace (BOF) slag or basic oxygen slag (BOS). BOF slag is generated during the steelmaking process when raw iron is oxidized in the converter by oxygen to reduce the carbon content of the raw iron.

It is well known in the art that slags, especially BOF slag, need to be activated to play their role as hydraulic binders.

The WO 2022/238376 (Sika Technology AG) teaches various accelerators suitable for the activation of steelmaking slag, and especially of BOF slag, to react with water. The WO 2022/238376 also teaches various construction materials based on binders comprising or consisting of steelmaking slag.

However, what is missing in the prior art are detailed ways to formulate construction materials based on binders comprising or consisting of steelmaking slag.

### Summary of the invention

It is an objective of the present invention to provide construction materials based on binders comprising steelmaking slag, especially basic oxygen furnace slag. Especially, construction materials should fulfill at least one requirement of at least one industry standard for construction materials. Industry standards especially are EN 12004-1 for cementitious tile adhesive, EN 13888 for tile grouting material, EN 13813 for self-levelling underlayment or self-levelling overlayment, EN 998-1 for render, EN 1504-3 for repair mortar, EN 998-2 and/or EN 206-1 for masonry mortar or concrete EN 13813 for screed, EN 1504-6 for non-shrink grout, EN 998-2 for thin joint mortar, EN 1504-2 for waterproofing mortar, also called surface protection systems for concrete, EN 1504-6 for anchoring mortar, EN 998-1 for wall levelling compounds for interior or exterior use, EAD ETICS 040083000404 for external thermal insulation composite systems.

It is an objective of the present invention to provide construction materials based on binders comprising steelmaking slag, especially basic oxygen furnace slag, that can be used as cementitious tile adhesives. For example, such construction materials fulfill requirements of standard EN 12004-1.

It is an objective of the present invention to provide construction materials based on binders comprising steelmaking slag, especially basic oxygen furnace slag, that can be used as grouting materials. For example, such construction materials fulfill requirements of standard EN 13888 and/or EN 1504-6.

It is an objective of the present invention to provide construction materials based on binders comprising steelmaking slag, especially basic oxygen furnace slag, that can be used as repair mortars. For example, such construction materials fulfill requirements of standard EN 1504-3.

It has surprisingly been found that a specific combination of slag based binder, co-binder, and admixtures solve the objectives of the present invention. Thus, construction materials as claimed in claim 1 can solve one or more of the above objectives.

Further aspects of the present invention are the subject of independent claims. Preferred embodiments are the subject of dependent claims.

### Ways for carrying out the invention

In a first aspect the present invention relates to a construction material comprising or consisting of (in each case relative to the total dry weight of the construction material)
a) 5 - 60 w%, preferably 15 - 40 w%, of a slag based binder **B,** said slag based binder **B** consisting of
a1) at least one steelmaking slag **S1,** preferably basic oxygen furnace slag,
a2) at least one accelerator **A** selected from the group consisting of alkanolamines, reducing agents, sugars, sugar acids, carboxylic acids or their salts, amino acids or their salts, polyols, sulfamic acid, glyoxal, acetylacetone, pyrocatechol, nitrilotri(methylphosphonic acid), etidronic acid, mineral salts, or mixtures thereof,
a3) optionally a second slag **S2** which is chemically different from **S1,** preferably granulated blast furnace slag,
b) 30 - 90 w%, preferably 55 - 75 w% of at least one aggregate and/or filler,
c) 3 - 30 w%, preferably 4 - 20 w% of at least one co-binder **C,** said co-binder **C** being different from the slag based binder **B** and said co-binder **C** being selected from the group consisting of cement, calcium sulfate, lime, calcined magnesia, caustic magnesia, alumina, latent hydraulic binders, and/or pozzolanes,
d) optionally 0.01 - 12 w%, more preferably 0.05 - 6 w% of admixtures, and
e) optionally water in an amount to realize a mass ratio of water : dry constituents between 0.1 - 0.6.

Steelmaking slag within the present context is a by-product from the steelmaking process. Within the present context also iron slags, and especially furnace slags, are considered as steelmaking slags. Steelmaking slag is obtained for example in the Thomas process, the Linz-Donawitz process, the Siemens-Martin process or the electric arc furnace when iron is converted to steel. Steelmaking slag is generated when hot raw iron is treated with oxygen to remove carbon and other elements that have a higher affinity to oxygen than iron. Typically, fluxes and/or elements to fix impurities are added during the process, such as limestone or dolomite. Fluxes and fixing aids combine with silicates and oxides to form the liquid slag. Liquid slag is then separated from the crude steel and cooled in pits or ground bays to form crystalline or partly crystalline steelmaking slag. The cooled slag may then be crushed, milled, and sieved to a desired fineness. Preferentially, steelmaking slag of the present invention is a type of slag which has not been additionally treated in the hot state or during the cooling process.

The particle size of a steelmaking slag can be analyzed by sieve analysis as described for example in standard ASTM C136/C136M. The process separates fine particles from more course particles by passing the material through a number of sieves of different mesh sizes. The material to be analyzed is vibrated through a series of sequentially decreasing sieves using a single, or combination of horizontal, vertical or rotational motion. As a result, the percentage of particles retained on a sieve of a given size is given.

Another measure for the fineness of a steelmaking slag is the Blaine surface. The Blaine surface can be determined according to NF EN 196-6. According to a preferred embodiment, the steelmaking slag has a Blaine surface of between 1000 - 8000 cm²/g, preferably 2000 - 6000 cm²/g, more preferably 3000 - 5000 cm²/g. This is because the accelerators will accelerate the reaction of steelmaking slag with water to such an extent that also coarser slag can be used. Coarser slag may have the advantage of better availability and lower cost as compared to fine slag. It is, however, also possible to use a steelmaking slag with a higher specific surface. Steelmaking slag can be any slag resulting from the making of steel. Especially, steelmaking slag is any of granulated blast furnace slag (GBBS), basic oxygen furnace slag (BOF slag), ladle slag or electric arc furnace slag.

A very preferred type of steelmaking slag within the present context is basic oxygen furnace slag (BOF). According to embodiments, the steelmaking slag is a basic oxygen furnace slag. Another common name for basic oxygen furnace slag is basic oxygen slag (BOS). The chemical composition of a BOF slag can be determined by XRF as described in ASTM D5381-93. A typical BOF slag has a chemical composition with 27 - 60 wt.-% of CaO, 8 - 38 wt.-% of iron oxides, 7 - 25 wt.-% of SiO₂, 1 - 15 wt.-% of MgO, 1 - 8 wt.-% of Al₂O₃, 0.5 - 8 wt.-% of MnO, 0.05 - 5 wt.-% of P₂O₅, and some minor components, especially oxides of Ti, Na, K, and Cr, with < 1 wt.-%. The chemical composition of a BOF slag may vary depending on steel plant and depending on operation parameter of the basic oxygen furnace. Especially preferred BOF slag has a chemical composition with 35 - 55 wt.-% of CaO, 10-30 wt.-% of iron oxides, 10 - 20 wt.-% of SiO₂, 2 - 10 wt.-% of MgO, 1 - 5 wt.-% of Al₂O₃, 0.5 - 5 wt.-% of MnO, 0.5 - 3 wt.-% of P₂O₅, and some minor components, especially oxides of Ti, Na, K, and Cr, with < 1 wt.-%.

A preferred steelmaking slag, especially a basic oxygen furnace slag, has a content of iron oxides expressed as Fe₂O₃ of 8 - 38 w%, preferably of 10 - 30 wt.-%, and a content of sulfur expressed as SOs of < 1 w%, preferably < 0.5 w%, especially < 0.1 w%, in each case relative to the total dry weight of the steelmaking slag.

It is especially preferred, that the steelmaking slag does not comprise Dicalcium silicate (C2S, belite) in an amount of more than 66 wt.-% relative to the total dry weight of the slag.

When steelmaking slag reacts with water, a hydration reaction occurs, and different mineral phases are being formed. Thereby, water and slag are consumed, hardening proceeds and strength is developed.

The accelerators for the reaction of steelmaking slag with water are selected from the group consisting of alkanolamines, reducing agents, sugars, sugar acids, carboxylic acids and their salts, amino acids and their salts, polyols, sulfamic acid, glyoxal, acetylacetone, pyrocatechol, nitrilotri(methylphosphonic acid), etidronic acid, mineral salts, or mixtures thereof.

One type of suitable accelerators are alkanolamines. Alkanolamines are preferably selected from the group consisting of monoethanolamine, diethanolamine, triethanolamine (TEA), diethanolisopropanolamine (DEIPA), ethanoldiisopropanolamine (EDIPA), isopropanolamine, diisopropanolamine, triisopropanolamine (TIPA), N-methyldiisopropanolamine (MDIPA), N-methyldiethanolamine (MDEA), tetrahydroxyethylethylenediamine (THEED), and tetrahydroxyisopropylethylenediamine (THIPD), as well as mixtures of two or more of these alkanolamines.

Preferred alkanolamines are triethanolamine (TEA), triisopropanolamine (TIPA), diethanolisopropanolamine (DEIPA), and ethanoldiisopropanolamine (EDIPA). Especially preferred alkanolamines are diethanolisopropanolamine (DEIPA), ethanoldiisopropanolamine (EDIPA), and triisopropanolamine (TIPA).

Another type of suitable accelerators are sugars. A "sugar" in the sense of the present invention is a carbohydrate having an aldehyde group. In particularly preferred embodiments, the sugar belongs to the group of monosaccharides or disaccharides. Examples of sugars include, but are not limited to, glyceraldehyde, threose, erythrose, xylose, lyxose, ribose, arabinose, allose, altrose, glucose, mannose, gulose, idose, galactose, tallose, fructose, sorbose, lactose, maltose, sucrose, lactulose, trehalose, cellobiose, chitobiose, isomaltose, palatinose, mannobiose, raffinose, and xylobiose. Sugars can also be used in form of dextrines, vinasse, or molasse. Both, D and L-form of sugars are likewise preferred. Especially preferred sugars are fructose, mannose, maltose, glucose, galactose, dextrines, vinasse, and molasses.

Another type of suitable accelerators are sugar acids or their salts. A "sugar acid" in the context of the present invention is a monosaccharide having a carboxyl group. It may belong to any of the classes of aldonic acids, ursonic acids, uronic acids or aldaric acids. Preferably, it is an aldonic acid. Examples of sugar acids useful in connection with the present invention include, but are not limited to gluconic acid, ascorbic acid, neuraminic acid, glucuronic acid, galacturonic acid, iduronic acid, mucilic acid and saccharic acid. The sugar acid may be in the form of the free acid or as a salt. According to embodiments, salts of sugar acids may be salts with metals of groups la, Ila, lb, Ilb, IVb, Vlllb of the periodic table of elements. Preferred salts of sugar acids are salts of alkali metals, alkaline earth metals, iron, cobalt, copper or zinc. Especially preferred are salts with sodium, potassium, and calcium. Both, D- and L-form of sugar acids are likewise preferred. An especially preferred sugar acid is gluconic acid and its salts, especially sodium gluconate.

Another type of suitable accelerators are amino acids or their salts. Amino acids preferably are selected from the group consisting of glycine, lysine, glutamate, glutamic acid, aspartic acid, polyaspartic acid, methionine, nitrilotriacetic acid (NTA), iminodisuccinic acid, methylglycine-N,N-diacetic acid, and N,N-bis(carboxylatomethyl)glutamic acid, ethylenediamine disuccinic acid (EDDS), ethylenediamine tetraacetic acid (EDTA), hexamethylendiamine tatraacetic acid (HEDTA), diethylenetriamine pentaacetic acid (DTPA) or their salts. Especially preferred are salts of alkali metals or alkaline earth metals. In particular, salts are selected from the group consisting of tetratsodium N,N-bis(carboxylatomethyl)glutamate, trisodium methylglycine-N,N-diacetate, tetrasodium iminodisuccinate (IDS), trisodium ethylenediamine disuccinate, tetrasodium ethylenediamine tetraacetate, and tetrasodium hexamethylendiamine tetraacetate.

Another type of suitable accelerators are carboxylic acids or their salts. The term "carboxylic acid" means any organic molecule with a carboxylic acid or carboxylate group, except sugar acids as described above or amino acids as described above.

Especially preferred carboxylic acids are formic acid, glycolic acid, citric acid, lactic acid, malic acid, tartaric acid, oxalic acid, malonic acid, succinic acid, glutaric acid, adipic acid, and salicylic acid. The carboxylic acid may be in the form of the free acid or in the form of a salt. According to embodiments, salts of carboxylic acids may be salts with metals of groups la, Ila, lb, Ilb, IVb, Vlllb of the periodic table of elements. Preferred salts of sugar acids are salts of alkali metals, alkaline earth metals, iron, cobalt, copper or zinc. Especially preferred are salts with sodium, potassium, and calcium. Preferred salts of carboxylic acids are calcium malonate, calcium succinate, calcium lactate, potassium citrate, and sodium citrate. Throughout this invention, where reference is made to a multibasic acid, the salts thereof are meant to encompass mono-, di-, tri- and higher salts. For example, the term sodium citrate is meant to encompass monosodium citrate, disodium citrate, and trisodium citrate.

Another type of suitable accelerators are reducing agents. Within the present context reducing agents are materials with a reduction potential measured under standard conditions against a standard reference hydrogen half-cell of below 0.77 V. That is, suitable reducing agents have a half-cell potential lower than the couple Fe³⁺/Fe²⁺. Reducing agents are preferably selected from the group consisting of thiosulfates, thiocyanates, and sulfides, preferably from sodium thiosulfate or potassium sulfide. Reducing agents within the present context do not belong to any of the groups of alkanolamines, sugars, sugar acids, carboxylic acids and their salts, or amino acids and their salts as described above.

Another type of suitable accelerators are polyols. Especially suitable polyols within the present context are pentaerythritol, glycerol, and 1,1,1-tris(hydroxymethyl)ethane.

Other suitable accelerators are sulfamic acid, glyoxal, acetylacetone, pyrocatechol, nitrilotri(methylphosphonic acid), and etidronic acid.

Another type of suitable accelerators are mineral salts. Within the present context mineral salts are salts selected from the group consisting of alkaline metal or earth alkaline metal nitrates, alkaline metal or earth alkaline metal nitrites, alkaline metal or earth alkaline metal chlorides, alkaline metal or earth alkaline metal sulfates, aluminum chloride, and aluminum sulfate. Especially preferred mineral salts are sodium sulfate, calcium nitrite, calcium nitrate, calcium chloride, magnesium chloride, aluminum sulfate, and aluminum chloride.

According to embodiments, the accelerator is selected from the group consisting of triethanolamine (TEA), triisopropanolamine (TIPA), diethanolisopropanolamine (DEIPA), ethanoldiisopropanolamine (EDIPA), fructose, mannose, maltose, glucose, galactose, dextrines, vinasse, molasses, gluconic acid, ascorbic acid, neuraminic acid, glucuronic acid, galacturonic acid, iduronic acid, mucilic acid, saccharic acid and their sodium, potassium or calcium salts, formic acid, glycolic acid, citric acid, lactic acid, malic acid, tartaric acid, oxalic acid, malonic acid, succinic acid, glutaric acid, adipic acid, salicylic acid and their sodium, potassium or calcium salts, glycine, glutamic acid, aspartic acid, polyaspartic acid, tetrasodium iminodisuccinate (IDS), diethylenetriaminepentaacetic acid (DTMA), nitrilotriacetic acid (NTA), pentaerythritol, glycerol, 1,1,1-tris(hydroxymethyl)ethane, sulfamic acid, glyoxal, acetylacetone, pyrocatechol, nitrilotri(methylphosphonic acid), etidronic acid, sodium sulfate, calcium nitrite, calcium nitrate, calcium chloride, magnesium chloride, aluminum sulfate, aluminum chloride, thiosulfates, especially sodium thiosulfate, thiocyanates, and sulfides, especially potassium sulfide.

According to particularly preferred embodiments, the accelerator is selected from the group consisting of diethanolisopropanolamine (DEIPA), ethanoldiisopropanolamine (EDIPA), lactic acid, calcium lactate, oxalic acid, malonic acid, succinic acid, adipic acid, malic acid, tartaric acid, citric acid, sodium citrate, potassium citrate, gluconic acid, sodium gluconate, calcium formate, glycine, pentaerythritol, glycerol, 1,1,1-tris(hydroxymethyl)ethane, sulfamic acid, glyoxal, acetylacetone, pyrocatechol, tetrasodium iminodisuccinate (IDS), nitrilotriacetic acid (NTA), aluminum sulfate, and calcium chloride.

According to further preferred embodiments, the accelerator is a mixture of two alkanolamines or of an alkanolamine with at least one further accelerator different from an alkanolamine.

According to further embodiments, the accelerator is a mixture of an alkanolamine selected from the group consisting of triethanolamine (TEA), triisopropanolamine (TIPA), diethanolisopropanolamine (DEIPA), ethanoldiisopropanolamine (EDIPA), and/or methyldiethanolamine (MDEA), especially of TIPA and/or DEIPA, and one further accelerator selected from the group consisting of fructose, mannose, maltose, glucose, galactose, dextrines, vinasse, molasses, gluconic acid, ascorbic acid, neuraminic acid, glucuronic acid, galacturonic acid, iduronic acid, mucilic acid, saccharic acid and their sodium, potassium or calcium salts, formic acid, glycolic acid, citric acid, lactic acid, malic acid, tartaric acid, oxalic acid, malonic acid, succinic acid, glutaric acid, adipic acid, salicylic acid and their sodium, potassium or calcium salts, glycine, glutamic acid, aspartic acid, polyaspartic acid, tetrasodium iminodisuccinate (IDS), diethylenetriaminepentaacetic acid (DTMA), nitrilotriacetic acid (NTA), pentaerythritol, glycerol, 1,1,1-tris(hydroxymethyl)ethane sulfamic acid, glyoxal, acetylacetone, pyrocatechol, nitrilotri(methylphosphonic acid), etidronic acid, sodium sulfate, calcium nitrite, calcium nitrate, calcium chloride, magnesium chloride, aluminum sulfate, aluminum chloride, thiosulfates, especially sodium thiosulfate, thiocyanates, and sulfides, especially potassium sulfide.

Preferred embodiments of an accelerator of the present invention are mixtures of TIPA and/or DEIPA with at least one of lactic acid, malic acid, tartaric acid, citric acid, sodium citrate, potassium citrate, malonic acid, succinic acid, adipic acid, calcium formate, glycine, glycerol, sulfamic acid, pyrocatechol, sugars, especially fructose, tetrasodium iminodisuccinate (IDS), aluminum sulfate, and calcium chloride.

Especially preferred embodiments of an accelerator of the present invention are mixtures of TIPA and/or DEIPA with sugars, preferably fructose.

Further especially preferred embodiment of an accelerator of the present invention are mixtures of TIPA and/or DEIPA with citric acid or its salts, especially with citric acid, sodium citrate, potassium citrate, or calcium citrate.

According to further embodiments, the accelerator is a mixture of an alkanolamine selected from the group consisting of triethanolamine (TEA), triisopropanolamine (TIPA), diethanolisopropanolamine (DEIPA), ethanoldiisopropanolamine (EDIPA), and/or methyldiethanolamine (MDEA), especially of TIPA and/or DEIPA, and two further accelerators, the first further accelerator being selected from sodium citrate, and the second further accelerator being selected from the group consisting of mineral salts and reducing agents, preferably from sodium sulfate, calcium chloride, magnesium chloride, calcium nitrite, calcium nitrate, aluminum sulfate, sodium thiosulfate and potassium sulfide.

Further especially preferred embodiments of an accelerator of the present invention are mixtures of TIPA and/or DEIPA with sodium citrate.

According to embodiments, in a construction material of the present invention, the accelerator **A** is selected from a mixture of diethanolisopropanolamine and trisodium citrate or of triisopropanolamine and trisodium citrate.

The diethanolisopropanolamine or triisopropanolamine may be present in an amount of 0.05 - 0.6 w%, preferably 0.1 - 0.6 w%, relative to the total dry weight of the slag based binder **B.**

The trisodium citrate may be present in an amount of 0.05 - 1.0 w%, preferably 0.08 - 0.9 w%, more preferably 0.4 - 0.9 w%, especially 0.5 - 0.8 w%, relative to the total dry weight of the slag based binder **B.**

According to embodiments, in a construction material of the present invention, additionally at least one additional accelerator selected from the group consisting of calcium formate, calcium chloride, aluminum sulfate, fructose, and/or glycerol is present.

The at least one accelerator **A** of the present invention can be added to a construction material as an aqueous preparation, preferably as a preparation in the mixing water. Especially preferable, the at least one accelerator **A** is dissolved and/or dispersed in the mixing water.

The at least one accelerator **A** of the present invention can be added to a construction material in the form of a solid preparation. Especially, preferable, the at least one accelerator **A** is adsorbed onto the surface of a solid support material such as for example diatomaceous earth, clay, calcined clay, or a filler as described below.

The at least one accelerator **A** of the present invention can be co-grinded with the steelmaking slag **S1** and/or with the co-binder **C**. Co-grinding preferably is done during the manufacture of the steelmaking slag **S1** and/or the co-binder **C.**

According to embodiments, in a construction material of the present invention the at least one accelerator **A** is co-ground with the at least one steelmaking slag **S1.**

According to embodiments, in a construction material of the present invention the slag based binder **B** consists to at least 60 w%, preferably at least 80 w%, especially at least 95 w%, relative to the total dry weight of the slag based binder **B,** of at least one steelmaking slag **S1**, preferably of BOF slag.

According to embodiments, a construction material of the present invention comprises a second slag **S2** which is chemically different from **S1**. Chemically different means that the chemical composition and/or the phase composition of said second slag **S2** is different from the slag **S**1. Both slags **S1** and **S2** may originate from iron making or steel making. It is especially preferred that the slag **S1** is basic oxygen furnace slag and the slag **S2** is ground granulated blast furnace slag.

For example, the second slag **S2** is ground granulated blast furnace slag with a chemical composition of 25 - 50 w% CaO, 25 - 50 w% SiO₂, 2 - 25 w% of Al₂O₃, 0 - 5 w% of Fe₂O₃, 0 - 10 w% of MgO, and 0 - 7 w% of SOs. Very preferably, the second slag **S2** is a ground granulated blast furnace slag which is essentially amorphous, preferably with a content of amorphous phases of 70 - 100 w%.

The use of a second slag **S2,** especially of ground granulated blast furnace slag, is particularly helpful to control the volume expansion of a construction material of the present invention. Especially, the volume expansion of a construction material of the present invention is controlled if
(i) the volume expansion (ΔV/V) of a cylinder with a height of 40 mm and a diameter of 40 mm of the hydraulically setting composition is not more than 3.5 Vol.-% after 40 days curing at 35°C / 80% r.h, and/or
(ii) the linear expansion (ΔL/L) measured according to EN 12617-4 on a prism of 4 x 4 x 16 cm of the hydraulically setting composition is lower than 0,2% after curing for 40 days at 45°C /80 % r.h., and/or
(iii) a prism of 4 x 4 x 16 cm prepared according to EN 12617-4 of the hydraulically setting composition shows no significant cracking after curing for 96 days at 70°C / 80% r.h.

Preferably, the amount of a second slag **S2**, especially of ground granulated blast furnace slag, is less than 15 w%, more preferably less than 10 w%, relative to the total dry weight of the slag based binder **B.** It is particularly preferred that the slag based binder **B** does not contain a second slag **S2**.

Construction materials comprise aggregate and/or filler. Aggregates can be any material that is non-reactive in the hydration reaction of hydraulic binders. Aggregates can be any aggregate typically used for construction materials. Typical aggregates are for example rock, crushed stone, crushed concrete, gravel, sand, especially quartz sand, river sand and/or manufactured sand, glass, expanded glass, hollow glass beads, glass ceramics, quarry wastes, porcelain, electro fused or sintered abrasives, firing support, silica xerogels biosourced aggregates such as hemp or sunflower.

Aggregates useful for the present invention can have any shape and size typically encountered for such aggregates. An especially preferred aggregate is sand. Sand is a naturally occurring granular material composed of finely divided rock or mineral particles. It is available in various forms and sizes. Examples of suitable sands are quartz sand, limestone sand, river sand or crushed aggregates. Suitable sands are for example described in standards ASTM C778 or EN 196-1.

Fillers are characterized by a small particle size. Especially, fillers are selected from fine calcium carbonate, ground limestone, ground dolomite, and/or ground aluminum oxide, and/or non-reactive slags. Non-reactive means that slags useful as fillers do not react with water in hydration reactions. Slags suitable as fillers typically are treated in a way that leads to hydroxylation and/or carbonization of free lime. For example, the free lime content of a slag suitable as filler is < 2% according to standard EN 459-2.

It is possible to use more than one aggregate and more than one filler also in combination.

A co-binder **C** within the present context is an inorganic binder is selected from the group consisting of cement, calcium sulfate, lime, calcined magnesia, caustic magnesia, alumina, latent hydraulic binders, and/or pozzolanes. The co-binder **C** is different from the slag based binder **B.** Especially, the co-binder **C** does not comprise slag, especially does not comprise BOF slag and/or GGBS.

Cements can in particular be Portland cements of type CEM I, CEM II, CEM III, CEM IV, and CEM V as described in standard EN 197-1, calcium aluminate cements as described in standard EN 14647, and/or calcium sulfoaluminate cements (CSA). The term "calcium sulfate" is meant to encompass CaSO₄ in various forms, in particular CaSO₄ anhydrite, CaSO₄ α- and β- hemihydrate, CaSO₄ dihydrate, and gypsum. The term "lime" is meant to encompass natural hydraulic lime, formulated lime, hydraulic lime, and air lime as described in the standard EN 459-1:2015. The term "alumina" stands for aluminum oxides, aluminum hydroxides, and/or aluminum oxy-hydroxides such as gibbsite and boehmite, calcined or flash calcined alumina, alumina resulting from the Bayer process, hydratable alumina such as amorphous mesophase alumina and rho phase alumina. Pozzolanes and latent hydraulic materials preferably are selected from the group consisting of crude clay, calcined clay, especially metakaolin, kiln dust, microsilica, fly ash, pyrogenic silica, precipitated silica, silica fume, sodocalcic glass, borocalcic glass, zeolite, rice husk ash, burnt oil shale, and natural pozzolane such as diatomaceous earth, pumice and trass. Pozzolanes and latent hydraulic binders do not encompass steelmaking slags within the present context.

Preferably, the co-binder **C** is selected from the group consisting of Portland cement, calcium aluminate cement, calcium sulfoaluminate cement, calcium sulfate, hydraulic lime, air lime, calcined magnesia, caustic magnesia, calcined alumina, hydratable alumina, aluminum hydroxide, pozzolanes, especially crude clays and/or calcined clays, laterite, pyrogenic silica, silica fume, fly ash, and latent hydraulic binder, where pozzolane and latent hydraulic binder does not encompass steelmaking slag. Especially preferred, the co-binder **C** is selected from the group consisting of Portland cement, calcium aluminate cement, calcium sulfoaluminate cement, gypsum, calcium sulfate, lime, calcined clays, pozzolanes, silica fume, fly ash, caustic magnesia, and latent hydraulic binder, where pozzolane and latent hydraulic binder do not encompass steelmaking slag.

Clay within the present context are solid materials composed to at least 30 w%, preferably to at least 35 w%, especially to at least 75 w%, each relative to its dry weight, of clay minerals. Such clay minerals preferably belong to the kaolin group (such as kaolinite, dickite, nacrite or halloysite), the smectite group (such as montmorillonite, nontronite or saponite), the vermiculite group, serpentine, palygorskite, sepiolite, chlorite, talc, pyrophyllite, micas (such as biotite muscovite, illite, glauconite, celadonite, and phengite), minerals resulting from leaching and weathering of sedimentary or metamorphic rock such as laterites or mixtures thereof. Crude clays are clay minerals extracted from e.g. a quarry, optionally purified and optionally dried. Calcined clays especially are low-temperature calcined clays that have been thermally treated at temperatures between 500 - 1200°C or in a flash calcination process at temperatures between 800 - 1100 °C. A suitable flash calcination process is for example described in WO 2014/085538. A low-temperature calcined clay is an anhydrous material.

According to especially preferred embodiments of the present invention, the calcined clay is metakaolin. Metakaolin is a material resulting from the low-temperature calcination of kaolinite or minerals that are rich in kaolinite, e.g. have a content of kaolinite of at least 30 w%, preferably to at least 35 w%, relative to its dry weight. Calcination temperatures for the manufacturing of metakaolin typically are in the range of 500 - 900 °C.

Laterite is a naturally occurring material resulting from the weathering and leaching of rock. The mineralogical and chemical composition of laterites may vary. Typical laterites comprise quartz, kaolinite, goethite, hematite, and gibbsite.

Similar to the second slag **S2,** the co-binder **C,** especially pozzolanes, preferably crude clay or calcined clay, can be used to control the volume expansion of a construction material of the present invention.

According to embodiments, the co-binder **C** comprises calcined clay, preferably metakaolin and the weight ratio of slag based binder **B** to calcined clay is in the range of 1 - 20, preferably 4 - 15, more preferably 5 - 10, especially 5 - 8.

Calcined clays within the present context preferably are low-temperature calcined clays. A low-temperature calcined clay is a clay material that has been put to a heat treatment, preferably at a temperature between 500 - 1200 °C, or in a flash calcination process at temperatures between 800 - 1100 °C. A suitable flash calcination process is for example described in WO 2014/085538. According to especially preferred embodiments of the present invention, the calcined clay is metakaolin. Metakaolin is a material resulting from the low-temperature calcination of kaolinite or minerals that are rich in kaolinite, e.g. have a content of kaolinite of at least 30 w%, preferably to at least 35 w%, relative to its dry weight. Calcination temperatures for the manufacturing of metakaolin typically are in the range of 500 - 900 °C.

According to embodiments the co-binder **C** comprises or consists of calcium sulfate and the weight ratio of slag based binder **B** to calcium sulfate is not higher than 20:1, preferably not higher than 15:1, especially not higher than 6:1.

According to embodiments, the weight ratio of slag based binder **B** to calcium sulfate is not lower than 1:1, preferably not lower than 2:1, especially not lower than 5:1.

Calcium sulfate, within the present context, includes anhydrite, gypsum, calcium sulfate hemihydrate in the alpha- and beta-form, calcium sulfate dihydrate, and any mixtures thereof. Calcium sulfate can be based on LGD gypsum, phospho-gypsum, fluoro-gypsum, and natural gypsum. According to preferred embodiments, the sulfate source is selected from calcium sulfate hemihydrate or anhydrite.

According to embodiments the co-binder **C** comprises or consists of calcium sulfoaluminate cement, and the weight ratio of slag based binder **B** to the calcium sulfoaluminate cement is in the range of 1 - 15, preferably 4 - 15, especially 4 - 10. Preferably, a calcium sulfoaluminate cement (CSA) of the present invention is a cement comprising a clinker comprising C₄(A₃₋ₓFₓ)$ (C: CaO; A: Al₂O₃; F: Fe₂O₃; $: SOs) where x is an integer of from 0 - 3. CSA of the present invention typically comprise further phases selected from aluminates (CA, C₃A, C₁₂A₇ with C: CaO; A: Al₂O₃), belite (C₂S with C: CaO, S: SiO₂), ferrites (C₂F, C₂AF, C₄AF, with C: CaO; A: Al₂O₃; F: Fe₂O₃), ternesite (C₅S₂$ with C: CaO, S: SiO₂; $: SO₃) and anhydrite. According to certain embodiments CSA of the present invention contains 15-75 w% C₄A₃$, 0-10 w% aluminates, 0-70 w% belite, 0-35 w% ferrites, 0-20 w% ternesite, and 0-20 w% anhydrite, each based on the total dry weight of the CSA cement. Suitable CSA can, for example, be commercially obtained from Heidelberg Cement AG, Buzzi Unicem or under the tradename Calumex from Caltra B.V.

According to embodiments, the co-binder **C** comprises or consists of a mixture of calcium sulfate and calcium sulfoaluminate cement and a weight ratio of calcium sulfate to calcium sulfoaluminate cement is in the range of 1 - 5, preferably 2 - 3.

Calcium sulfate and CSA cement are as described above.

A construction material of the present invention optionally comprises between 0.01 - 12 w%, more preferably 0.05 - 6 w% of admixtures. According to embodiments, admixtures are selected from the list consisting of plasticizers, superplasticizers, shrinkage reducers, air entrainers, de-aerating agents, stabilizers, viscosity modifiers, thickeners, water reducers, retarders, water resisting agents, hydrophobic agents, fibers, blowing agents, defoamers, redispersible polymer, dedusting agents, chromate reducers, pigments, biocides, corrosion inhibitors, and steel passivating agents.

Thickeners may especially be selected from cellulosic materials such as modified cellulose, especially cellulose ethers such as hydroxypropylmethyl cellulose, hydroxyethylmethyl cellulose, hydroxyethyl cellulose, methylhydroxyethyl cellulose, and methylhydroxypropyl cellulose. Water retention agents may especially be selected from superabsorbent polymers, sheet silicates, or starches, especially modified starches. Superplasticizers can especially be lignosulphonates, polyacrylates, or polycarboxylate ethers.

According to embodiments, the admixture comprises or consists of a hydrophobic agent present in an amount so that a dosage of from 0.05 - 0.3 w% of the hydrophobic agent, relative to the total dry weight of the construction material, results. Preferred hydrophobic agents are metal soaps, for example metal salts of stearic acid, oleic acid, or capric acid, silanes, siloxanes, silicones, silicate resins, fine wax emulsions, and bitumen emulsions.

According to embodiments, the admixture comprises or consists of at least one redispersible polymer and/or at least one cellulose ether, and/or at least one modified starch, and/or at least one plasticizer.

Especially, the redispersible polymer is present in the form of a redispersible polymer powder. The term redispersible polymer refers to a material which contains a polymer and after introduction into water forms a stable dispersion. A redispersible polymer encompasses not only the polymer but typically also mixtures thereof with e.g. protective colloids, emulsifiers, and support materials. Redispersible polymer powders can be manufactured for example by spray drying of polymer dispersions as for example described in patent application EP1042391. Suitable redispersible polymers and redispersible polymer powders are for example available from Wacker Chemie AG under the trade name Vinnapas.

The redispersible polymer preferably is a copolymer of two or more of the following monomers: ethylene, propylene, butylene, isoprene, butadiene, styrene, acrylonitrile, acrylic acid, methacrylic acid, esters of acrylic acid, esters of methacrylic acid, vinylesters, vinylchloride. Preferred redispersible polymers are copolymers of vinylacetate and ethylene, vinylacetate and vinylchloride and ethylene, vinylacetate and ethylene and methylmethacrylate, vinylacetate and ethylene and vinylester, vinylacetate and ethylene and acrylic acid ester, vinylchloride and ethylene and vinyllaureate, vinylacetate and vinylversatate, acrylic ester and styrene, acrylic ester and styrene and butadiene, acrylic ester and acrylonitrile, styrene and butadiene, acrylic acid and styrene, methacrylic acid and styrene, styrene and acrylic acid ester, styrene and methacrylic acid ester.

According to embodiments, the at least one redispersible polymer is selected from copolymers of vinylacetate, vinylchloride, and ethylene, the at least one cellulose ether is a methylhydroxyethyl cellulose ether, the at least one modified starch is a starch ether, and the at least one plasticizer is a polycarboxylate ether or a polyacrylate.

According to embodiments, a construction material of the present invention comprises (in each case relative to the total dry weight of the construction material)
(i) 20 - 40 w% of basic oxygen furnace slag,
(ii) 0.1 - 0.3 w% of sodium citrate,
(iii) 0.02 - 0.2 w% of an alkanolamine, preferably diethanolisopropanolamine,
(iv) 2 - 10 w% of metakaolin,
(v) 1 - 5 w% of calcium sulfate,
(vi) 45 - 65 w% of aggregates, preferably sand,
(vii) optionally 5 - 10 w% of fillers, preferably calcium carbonate fillers,
(viii) 0.1 - 0.5 w% of a thickener, preferably cellulose ether,
(ix) 0.01 - 0.1 w% of a water retention agent, preferably modified starch,
(x) 0.5 - 2 w% of a redispersible polymer,
(xi) optionally 0.01 - 1 w% of calcium chloride and/or calcium formate, and
(xii) optionally 0.05 - 0.3 w% of a hydrophobic agent, preferably a silane and/or siloxane.

According to embodiments, a construction material of the present invention comprises (in each case relative to the total dry weight of the construction material)
(i) 20 - 40 w% of basic oxygen furnace slag,
(ii) 0.1 - 0.3 w% of sodium citrate,
(iii) 0.02 - 0.2 w% of an alkanolamine, preferably diethanolisopropanolamine,
(iv) 2 - 10 w% of Portland cement, calcium aluminate cement, or calcium sulfoaluminate cement,
(v) 2-10 w% of metakaolin,
(vi) 1 - 5 w% of calcium sulfate,
(vii) 45 - 65 w% of aggregates, preferably sand,
(viii) optionally 5-10 w% of fillers, preferably calcium carbonate fillers,
(ix) 0.1 - 0.5 w% of a thickener, preferably cellulose ether,
(x) 0.01 - 0.1 w% of a water retention agent, preferably starch,
(xi) 0.5 - 2 w% of a redispersible polymer,
(xii) optionally 0.01 - 1 w% of calcium chloride and/or calcium formate, and
(xiii) optionally 0.05 - 0.3 w% of a hydrophobic agent, preferably a silane and/or siloxane.

According to embodiments, a construction material of the present invention comprises (in each case relative to the total dry weight of the construction material)
(i) 30 - 40 w% of basic oxygen furnace slag,
(ii) 0.1 - 0.4 w% of sodium citrate,
(iii) 0.02 - 0.2 w% of an alkanolamine, preferably diethanolisopropanolamine,
(iv) optionally 2 - 10 w% of Portland cement, calcium aluminate cement, or calcium sulfoaluminate cement,
(v) 2-10 w% of metakaolin,
(vi) 2 - 5 w% of calcium sulfate,
(vii) 40 - 55 w% of aggregates, preferably sand,
(viii) 5-15 w% of fillers, preferably calcium carbonate fillers,
(ix) 0.01 - 0.1 w% of a thickener, preferably cellulose ether,
(x) 0.01 - 0.1 w% of a water retention agent, preferably starch,
(xi) 0.5 - 2 w% of a redispersible polymer.

Any of the construction materials of the above embodiments can be mixed with water to prepare a wet mortar. Suitable amounts of water are such that a mass ratio of water to dry constituents of between 0.1 - 0.6 results. Other suitable mass ratio of water to dry constituents can be from 0.1 - 0.45, or 0.2 - 0.45, or 0.1 - 0.25.

In another aspect the present invention relates to the use of a construction material as described above as a tile adhesive, a grouting mortar, a repair mortar, a masonry mortar, a waterproofing mortar, an anchoring mortar, a render, a screed, a self-levelling underlayment or self-levelling overlayment, a thin joint mortar, or a wall levelling compound.

All features described as preferred above also apply to this aspect.

In particular, a tile adhesive of the present invention conforms to one of the classes C1, C1E, C1F, C1FT, C2, C2E, C2F, C2S1, C2S2, C2FT, C2FTS1 according to standard EN 12004-1.

In another aspect the present invention relates to a method of tiling a surface comprising the steps of
(i) providing a construction material as described above,
(ii) mixing the construction material with water in a weight ratio of water to dry construction material in the range of 0.1 - 0.6,
(iii) applying the mixture obtained in step (ii) to said surface,
(iv) applying a tile to the assembly obtained in step (iii) while the mixture is still wet,
(v) optionally hardening the assembly obtained in step (iv).

All features described as preferred above also apply to this aspect.

According to embodiments, the weight ratio of water to dry construction material in step (ii) is adjusted to control the rheology of the resulting mixture. A higher amount of water will lead to a more flowable mixture and a lower amount of water to a more pasty mixture. Methods and devices for mixing of the construction material with water are not particular limited and are known to the person skilled in the art. Mixing can be continuously, semi-continuously or batch-wise. Continuous mixing offers the advantage of a high material throughput.

It is possible to apply the mixture in step (iii) by any means known to the person skilled in the art. According to one embodiment, the mixture in step (iii) is applied by trowel, brush or roller. According to another embodiment, the mixture in step (iii) is applied in a spray application. Spray applications have the advantage that the application can be done very quickly and in a continuous manner. Suitable equipment for such spray applications is known to the person skilled in the art.

It is possible, in step (iii) to additionally apply the mixture on the tile side intended to be in contact with said surface

Hardening proceeds with time and physical properties, e.g. compressive strength, adhesion strength, etc. are developed thereby. A construction composition of the present invention will harden at various temperatures when mixed with water. It is, however, preferred to do the hardening in step (v) at temperatures between +4 °C and +50 °C, preferably between +5 °C and +35 °C.

It is possible to include further steps into a method of tiling of the present invention. Further steps may be cleaning the substrate and priming the substrate.

In another aspect the present invention relates to a tiled surface, especially as part of a building, obtained in a method as described above.

Especially the tiled surface can be part of basement walls, floor structures, drainages, pipes, silos, stairs, bathrooms, kitchens, swimming pools, balconies, terraces, ponds or basins, harbor structures and works of civil engineering, e.g. tunnels.

The following examples provide the skilled person with further details and embodiments of the present invention.

### Examples

BOF slag was a steelmaking slag with a Blaine surface of 3000 cm²/g. The BOF slag had the following approximate chemical composition:

| CaO | Fe₂O₃ | SiO₂ | MgO | Al₂O₃ | MnO | P₂O₅ | TiO₂ | SO₃ | Others |
|---|---|---|---|---|---|---|---|---|---|
| 49.7% | 23.5% | 13.5% | 4.6% | 3.6% | 2.1% | 1.7% | 0.9% | 0.2% | 0.2% |

Diethanolisopropanolamine (DEIPA), triisopropanolamine (TIPA), trisodium citrate, calcium chloride, calcium formate, Al₂(SO₄)₃●14 H₂O, fructose, and aluminum hydroxide were purchased from Sigma-Aldrich in high purity and used as received.

Metakaolin consisted to appr. 95 w% of SiO₂ and Al₂O₃, had a BET surface of 20 m²/g, a pozzolanic reactivity (Chapelle test) of 1100 mg Ca(OH)₂ / g, and a methylene blue value of 7 g/kg of metakaolin.

CaSO₄ was an anhydrite.

OPC was a CEM I 42.5R.

CSA was a calcium sulfoaluminate cement with a content of C₄A₃$ of appr. 54 w%, C₂S of appr. 29 w%, and C$ of appr. 0.6 w%. CSA had a Blaine surface of 4600 cm²/g.

Precipitated calcium carbonate with a median particle size of 50 nm.

Filler 1 was Fillinox 3000, a non-reactive EAF slag with a Blaine fineness of 2500 cm²/g. Filler 2 was a limestone powder with a particle size of 0.9-80 µm.

Silica sand 1 had particle sizes between 75 - 425 µm. Silica sand 2 had a bimodal particle size distribution with particle sizes ranging from 0.08 - 0.8 mm. Silica sand 3 had particles sizes between 0.063 - 4 mm.

Modified cellulose was a methylhydroxyethyl cellulose.

RDP 1 was a redispersible polymer powder based on a copolymer of vinyl acetate and vinyl versatate. RDP 2 was a redispersible polymer powder based on a copolymer of vinyl acetate, vinyl chloride, and ethylene. RDP 3 was a redispersible polymer powder based on a copolymer of vinyl acetate, vinyl versatate, and maleic ester.

Silane/Siloxane used was a mixture of alkyl-trialkoxysilane and its oligomers in powder form.

The defoamer was a blend of hydrocarbons and polyalkylene glycols on an inorganic carrier.

Fibers were 6mm polypropylene fibers.

The SRA was neopentyl glycol.

For the preparation of mortars, dry constituents were mixed in the amounts indicated in the following tables 1 - 3 until visually homogeneous. DEIPA and trisodium citrate were pre-mixed in the mixing water and thus added together with the mixing water in the amount indicated in following tables 1 - 3. Mixing of dry mix and mixing water was effected for 1.5 to 2 min at slow speed settings (140 rpm and 62 rpm planetary movement) on a Hobart mixer.

Initial adhesion strength, adhesion strength after heat ageing, and adhesion strength after water immersion were measured in accordance with standard EN 1348:2007. Adhesion strength after 20 min open time was measured in accordance with standard EN 1346:2007. Compressive strength was measured after the time indicated in below tables 3 and 4 in accordance with standard EN 12190:1998.

**Table 1: Examples 1 (not inventive) and 2-7 (inventive)**

| | **1** | **2** | **3** | **4** | **5** | **6** | **7** |
|---|---|---|---|---|---|---|---|
| BOF [g] | 24 | 24 | 24 | 24 | 24 | 24 | 24 |
| Metakaolin [g] | 3 | 3.52 | 3.52 | 3.5 | 8.5 | 3.52 | 3.52 |
| CaSO₄ [g] | 3 | 3 | 3 | 3 | 3 | 3 | 3 |
| Filler 1 [g] | 8 | 8 | 8 | 8 | 3 | 8 | 8 |
| Silica sand 1 [g] | 60.7 | 59.97 | 59.37 | 59.39 | 59.39 | 59.30 | 59.42 |
| Modified cellulose [g] | 0.25 | 0.25 | 0.25 | 0.25 | 0.25 | 0.25 | 0.25 |
| Starch ether [g] | 0.05 | 0.05 | 0.05 | 0.05 | 0.05 | 0.05 | 0.05 |
| RDP 1 [g] | 1 | 1 | 1 | 1 | 1 | 1 | 1 |
| DEIPA [g] | | 0.04 | 0.04 | 0.04 | 0.04 | 0.04 | 0.04 |
| Trisodium citrate [g] | | 0.17 | 0.17 | 0.17 | 0.17 | 0.24 | 0.12 |
| CaCl₂ [g] | | | | 0.6 | 0.6 | 0.6 | 0.6 |
| Calcium formate [g] | | | 0.6 | | | | |
| Ratio w/p* | 0.2 | 0.2 | 0.2 | 0.2 | 0.2 | 0.2 | 0.2 |
| Initial adhesion strength, 23°C/7d [MPa] | 0.32 | 0.98 | 1.02 | 0.95 | 0.79 | 0.87 | 0.86 |
| Adhesion strength, 20 min open time, 23°C/7d [MPa] | 0 | 1.16 | 1.02 | 0.83 | 0.58 | 0.84 | 0.83 |
| Adhesion strength, water immersion [MPa] | 0.33 | 0.37 | 0.43 | 0.51 | 0.42 | 0.52 | 0.68 |
| Adhesion strength, heat ageing [MPa] | 0.03 | 0.58 | 0.79 | 0.71 | 0.53 | 0.18 | 0.21 |

| | | | | | | | |
|---|---|---|---|---|---|---|---|
| * weight ratio of water to powder (dry constituents) | | | | | | | |

**Table 1 continued: Examples 8 - 13 (inventive)**

| | **8** | **9** | **10** | **11** | **12** | **13** |
|---|---|---|---|---|---|---|
| BOF [g] | 24 | 24 | 30.4 | 30.4 | 30.4 | 30.4 |
| Metakaolin [g] | 3.52 | 4.27 | 4.45 | 4.45 | 4.45 | 4.45 |
| CaSO₄ [g] | 3 | 3 | 3.8 | 3.8 | 1.8 | 5.8 |
| Filler 1 [g] | 8 | 8 | | | | |
| Silica sand 1 [g] | 59.39 | 58.53 | 59.04 | 59.17 | 61.17 | 57.17 |
| Modified cellulose [g] | 0.25 | 0.25 | 0.18 | 0.25 | 0.25 | 0.25 |
| Starch ether [g] | 0.05 | 0.05 | 0.05 | 0.05 | 0.05 | 0.05 |
| RDP 1 [g] | 1 | 1 | 1 | 1 | 1 | 1 |
| DEIPA [g] | 0.02 | 0.13 | 0.06 | 0.06 | 0.06 | 0.06 |
| Trisodium citrate [g] | 0.17 | 0.17 | 0.22 | 0.22 | 0.22 | 0.22 |
| CaCl₂ [g] | 0.6 | 0.6 | 0.8 | 0.6 | 0.6 | 0.6 |
| Calcium formate [g] | | | | | | |
| Ratio w/p* | 0.2 | 0.2 | 0.2 | 0.2 | 0.2 | 0.2 |
| Initial adhesion strength, 23°C/7d [MPa] | 0.98 | 1.32 | 1.06 | 1.01 | 1.20 | 1.21 |
| Adhesion strength, 20 min open time, 23°C/7d [MPa] | 0.97 | 1.28 | 0.72 | 0.82 | 1.23 | 0.98 |
| Adhesion strength, water immersion [MPa] | 0.66 | 0.55 | 0.94 | 0.56 | 0.35 | 0.55 |
| Adhesion strength, heat ageing [MPa] | 0.45 | 0.80 | 0.86 | 0.94 | 1.13 | 0.93 |

**Table 1 continued: Examples 14 - 16 (inventive)**

| | **14** | **15** | **16** |
|---|---|---|---|
| BOF [g] | 30.4 | 30.4 | 30.4 |
| Metakaolin [g] | 4.45 | 4.45 | 4.45 |
| CaSO₄ [g] | 3.8 | 3.8 | 3.8 |
| Silica sand 1 [g] | 59.17 | 59.12 | 59.17 |
| Modified cellulose [g] | 0.25 | 0.25 | 0.25 |
| Starch ether [g] | 0.05 | 0.05 | 0.05 |
| RDP 1 [g] | | | |
| RDP 2 [g] | 1 | 1 | 1 |
| DEIPA [g] | 0.06 | 0.06 | 0.06 |
| Trisodium citrate [g] | 0.22 | 0.22 | 0.22 |
| CaCl₂ [g] | | | 0.6 |
| Calcium formate [g] | 0.6 | 0.6 | |
| Silane/siloxane [g] | | 0.05 | |
| Ratio w/p* | 0.2 | 0.2 | 0.2 |
| Initial adhesion strength, 23°C/7d [MPa] | 1.13 | 1.23 | 1.0 |
| Adhesion strength, 20 min open time, 23°C/7d [MPa] | 1.31 | 1.19 | 0.83 |
| Adhesion strength, water immersion [MPa] | 0.61 | 0.90 | 0.74 |
| Adhesion strength, heat ageing [MPa] | 1.14 | 1.04 | 0.73 |

It can be seen from the results in above table 1 that the addition of a combination of DEIPA and trisodium citrate increases the adhesion strength (cf example 2 vs 1). The addition of calcium formate or calcium chloride further improves the overall adhesion strength (cf examples 3 and 4). An increase of metakaolin may weaken the adhesion after water immersion (cf examples 4 and 5). An optimal dosage of trisodium citrate exists for best adhesion after heat ageing but this must be balanced against the adhesion after water immersion (cf examples 3, 6, and 7). A low dosage of sulfate leads to good adhesion strength after 20 min open time and after heat ageing but also to lowered adhesion strength after water immersion (cf examples 11, 12, and 13). A comparison of examples 11 and 16 shows that some further improvements in adhesion strength after water immersion are possible by optimization of the redispersible polymer added. The additional use of a hydrophobic agent improves the adhesion strength after water immersion (cf example 14 and 15).

**Table 2: Examples 20 - 25 (inventive)**

| | **20** | **21** | **22** | **23** | **24** | **25** |
|---|---|---|---|---|---|---|
| BOF [g] | 30.4 | 30.4 | 30.4 | 30.4 | 30.4 | 30.4 |
| OPC [g] | 5 | | | | | |
| CSA [g] | | 3 | 3 | 3 | 3 | 3 |
| Metakaolin [g] | 4.45 | 4.45 | 4.45 | 4.45 | 4.45 | 4.45 |
| CaSO₄ [g] | 3.8 | 3.8 | 1.5 | 3.0 | 3.8 | 5.8 |
| Silica sand 1 [g] | 54.24 | 56.17 | 59.07 | 57.57 | 56.77 | 54.77 |
| Modified Cellulose [g] | 0.18 | 0.25 | 0.25 | 0.25 | 0.25 | 0.25 |
| Modified starch [g] | 0.05 | 0.05 | 0.05 | 0.05 | 0.05 | 0.05 |
| RDP 1 [g] | | 1 | 1 | 1 | 1 | 1 |
| RDP 3 [g] | 1 | | | | | |
| DEIPA [g] | 0.06 | 0.06 | 0.06 | 0.06 | 0.06 | 0.06 |
| Trisodium citrate [g] | 0.22 | 0.22 | 0.22 | 0.22 | 0.22 | 0.22 |
| CaCl₂ [g] | 0.6 | 0.6 | | | | |
| Ratio w/p* | 0.2 | 0.2 | 0.2 | 0.2 | 0.2 | 0.2 |
| Initial adhesion strength, 23°C/7d [MPa] | 1.09 | 1.16 | 1.14 | 1.05 | 0.76 | 0.83 |
| Adhesion strength, 20 min open time, 23°C/7d [MPa] | 0.43 | 0.46 | 1.66 | 1.50 | 0.77 | 1.22 |
| Adhesion strength, water immersion [MPa] | 0.90 | 0.62 | 0.33 | 0.44 | 0.52 | 0.48 |
| Adhesion strength, heat ageing [MPa] | 0.81 | 0.88 | 1.08 | 1.32 | 1.08 | 0.83 |

| | | | | | | |
|---|---|---|---|---|---|---|
| * weight ratio of water to powder (dry constituents) | | | | | | |

It can be seen from the results in above table 2 that the additional use of OPC in the co-binder improves the adhesion strength after water immersion (cf example 20). The use of CSA in the co-binder especially helps to increase the adhesion strength after heat resistance. When CSA is used in the co-binder the amount of calcium sulfate can be optimized to increase the adhesion strength (cf examples 22, 23, 24, and 25).

**Table 3: Examples 30 - 35 (inventive)**

| | **30** | **31** | **32** | **33** | **34** | **35** |
|---|---|---|---|---|---|---|
| BOF [g] | 7.4 | 18.4 | 29.4 | 36.8 | 36.8 | 36.8 |
| CaSO₄ [g] | 0.9 | 2.3 | 3.7 | 4.6 | 4.6 | 7.0 |
| Metakaolin [g] | 1.3 | 3.3 | 5.3 | 6.6 | 6.6 | 6.6 |
| OPC [g] | 29.4 | 18.4 | 7.4 | 0 | 0 | 0 |
| CSA [g] | 0 | 0 | 0 | 0 | 3 | 3 |
| Defoamer [g] | 0.2 | 0.2 | 0.2 | 0.2 | 0.2 | 0.2 |
| PP Fiber [g] | 0.1 | 0.1 | 0.1 | 0.1 | 0.1 | 0.1 |
| Filler 2 [g] | 6.3 | 6.3 | 6.3 | 5 | 0 | 0 |
| Silica sand 2 [g] | 51.72 | 48.16 | 44.62 | 44.17 | 46.08 | 43.68 |
| Al(OH)₃ [g] | 0.45 | 0.45 | 0.45 | 0 | 0.2 | 0.2 |
| Modified cellulose [g] | 0.04 | 0.04 | 0.04 | 0.04 | 0.04 | 0.04 |
| SRA [g] | 0.1 | 0.1 | 0.1 | 0.1 | 0.1 | 0.1 |
| RDP 1 [g] | 2 | 2 | 2 | 2 | 2 | 2 |
| DEIPA [g] | 0.03 | 0.09 | 0.14 | 0.14 | 0.17 | 0.17 |
| Trisodium citrate [g] | 0.06 | 0.16 | 0.25 | 0.25 | 0.31 | 0.31 |
| Ratio w/p | 0.16 | 0.16 | 0.16 | 0.16 | 0.16 | 0.16 |
| Compressive strength 24h [MPa] | 2 | 12 | 19 | 17 | 25 | 29 |
| Compressive strength 28d [MPa] | 56 | 48 | 44 | 34 | 41 | 52 |

| | | | | | | |
|---|---|---|---|---|---|---|
| * Weight ratio of water to powder (dry constituents) | | | | | | |

It can be seen from the results in above table 3 that the 24h strength can be increased with an increased amount of slag based binder **B** while final strength measured at 28d is still sufficient to fulfill requirements of standard EN 1504-3 for structural repair mortars (cf examples 30 - 32). The use of CSA cement as part of the co-binder leads to particularly increased 24 h strength. When the weight ratio for slag based binder B to calcium sulfate is lowered in a composition comprising CSA as part of the co-binder, additional strength at 28d can be gained (cf examples 34 and 35).

**Table 4: Examples 40 - 47 (inventive)**

| | **40** | **41** | **42** | **43** | **44** | **45** | **46** | **47** |
|---|---|---|---|---|---|---|---|---|
| BOF [g] | 20 | 20 | 20 | 20 | 20 | 20 | 20 | 20 |
| Metakaolin [g] | 2.5 | 2.5 | 2.5 | 2.5 | 2.5 | 2.5 | 2.5 | 2.5 |
| CaSO₄ [g] | 2.5 | 2.5 | 2.5 | 2.5 | 2.5 | 2.5 | 2.5 | 2.5 |
| Silica sand 3 [g] | 64.75 | 64.6 | 64.57 | 64.39 | 64.45 | 64.47 | 64.6 | 64.61 |
| Filler 1 [g] | 10 | 10 | 10 | 10 | 10 | 10 | 10 | 10 |
| CaCl₂ [g] | 0 | 0.15 | 0.15 | 0.15 | 0.15 | 0.15 | 0.15 | 0.15 |
| DEIPA [g] | 0.08 | 0.08 | 0 | 0.09 | 0.03 | 0.01 | 0.03 | 0.01 |
| TIPA [g] | 0 | 0 | 0.11 | 0 | 0 | 0 | 0 | 0 |
| Trisodium citrate [g] | 0.17 | 0.17 | 0.17 | 0.17 | 0.17 | 0.17 | 0.02 | 0.02 |
| Al₂(SO₄)₃ [g] | 0 | 0 | 0 | 0.2 | 0.2 | 0.2 | 0.2 | 0.2 |
| Fructose [g] | 0 | 0 | 0 | 0 | 0 | 0 | 0 | 0.01 |
| Ratio w/p* | 0.13 | 0.13 | 0.13 | 0.13 | 0.13 | 0.13 | 0.13 | 0.13 |
| Compressive strength 24h [MPa] | 6.1 | 6.0 | 1.6 | 11.4 | 7.1 | 1.7 | 4.2 | 7.9 |
| Compressive strength 28d [MPa] | 18.9 | 24.0 | 21.8 | 22.1 | 19.2 | 15.7 | 21.1 | 15.8 |

| | | | | | | | | |
|---|---|---|---|---|---|---|---|---|
| * Weight ratio of water to powder (dry constituents) | | | | | | | | |

## Claims

1. Construction material comprising or consisting of (in each case relative to the total dry weight of the construction material)
a) 5 - 60 w%, preferably 15 - 40 w%, of a slag based binder **B,** said slag based binder **B** consisting of
a1) at least one steelmaking slag **S1,** preferably basic oxygen furnace slag,
a2) at least one accelerator **A** selected from the group consisting of alkanolamines, reducing agents, sugars, sugar acids, carboxylic acids or their salts, amino acids or their salts, polyols, sulfamic acid, glyoxal, acetylacetone, pyrocatechol, nitrilotri(methylphosphonic acid), etidronic acid, mineral salts, or mixtures thereof,
a3) optionally a second slag **S2** which is chemically different from **S1,** preferably granulated blast furnace slag,
b) 30 - 90 w%, preferably 55 - 75 w% of at least one aggregate and/or filler,
c) 3 - 30 w%, preferably 4 - 20 w% of at least one co-binder **C,** said co-binder **C** being different from the slag based binder **B** and said co-binder **C** being selected from the group consisting of cement, calcium sulfate, lime, calcined magnesia, caustic magnesia, alumina, latent hydraulic binders, and/or pozzolanes,
d) optionally 0.01 - 12 w%, more preferably 0.05 - 6 w% of admixtures, and
e) optionally water in an amount to realize a mass ratio of water: dry constituents between 0.1 - 0.6.

2. Construction material according to claim 1, **characterized in that** the slag based binder **B** consists to at least 60 w%, preferably at least 80 w%, especially at least 95 w%, relative to the total dry weight of the slag based binder **B**, of at least one steelmaking slag **S1**, preferably of BOF slag.

3. Construction material according to at least one of claims 1 or 2, **characterized in that** the co-binder **C** comprises calcined clay, preferably metakaolin, and **in that** the weight ratio of slag based binder **B** to calcined clay is in the range of 1 - 20, preferably 4 - 15, more preferably 5 - 10, especially 5 - 8.

4. Construction material according to at least one of the preceding claims, **characterized in that** the co-binder **C** comprises or consists of calcium sulfate and **in that** the weight ratio of slag based binder **B** to calcium sulfate is not higher than 20:1, preferably not higher than 15:1, especially not higher than 6:1.

5. Construction material according to at least one of the preceding claims, **characterized in that** the co-binder **C** comprises or consists of calcium sulfoaluminate cement and **in that** the weight ratio of slag based binder **B** to the calcium sulfoaluminate cement is in the range of 1 - 15, preferably 4-15, especially 4 - 10.

6. Construction material according to at least one of the preceding claims, **characterized in that** the accelerator **A** is selected from a mixture of diethanolisopropanolamine and trisodium citrate or of triisopropanolamine and trisodium citrate.

7. Construction material according to claim 6, **characterized in that** diethanolisopropanolamine or triisopropanolamine is present in an amount of 0.05 - 0.6 w%, preferably 0.1 - 0.6 w%, relative to the total dry weight of the slag based binder **B.**

8. Construction material according to at least one of claims 6 to 7, **characterized in that** trisodium citrate is present in an amount of 0.05 - 1.0 w%, preferably 0.08 - 0.9 w%, more preferably 0.4 - 0.9 w%, especially 0.5 - 0.8 w%, relative to the total dry weight of the slag based binder **B.**

9. Construction material according to at least one of claims 6 to 8, **characterized in that** additionally at least one additional accelerator **A** selected from the group consisting of calcium formate, calcium chloride, aluminum sulfate, fructose, and/or glycerol is present.

10. Construction material according to at least one of the preceding claims, **characterized in that** the at least one accelerator **A** is co-ground with the at least one steelmaking slag **S1.**

11. Construction material according to at least one of the preceding claims, **characterized in that** the admixture comprises or consists of a hydrophobic agent present in an amount so that a dosage of from 0.05 - 0.3 w% of the hydrophobic agent, relative to the total dry weight of the construction material, results.

12. Construction material according to at least one of the preceding claims, **characterized in that** the admixture comprises or consists of at least one redispersible polymer and/or at least one cellulose ether, and/or at least one modified starch, and/or at least one plasticizer.

13. Construction material according to claim 12, **characterized in that** the at least one redispersible polymer is selected from copolymers of vinylacetate, vinylchloride, and ethylene, the at least one cellulose ether is a methylhydroxyethyl cellulose ether, the at least one modified starch is a starch ether, and the at least one plasticizer is a polycarboxylate ether or a polyacrylate.

14. Use of a construction material as claimed in at least one of claims 1 - 13 as a tile adhesive, a grouting mortar, a repair mortar, a masonry mortar, a waterproofing mortar, an anchoring mortar, a render, a screed, a self-levelling underlayment or self-levelling overlayment, a thin joint mortar, or a wall levelling compound.

15. A method of tiling a surface comprising the steps of
(i) providing a construction material as claimed in at least one of claims 1-13,
(ii) mixing the construction material with water in a weight ratio of water to dry construction material in the range of 0.1 - 0.6,
(iii) applying the mixture obtained in step (ii) to said surface,
(iv) applying a tile to the assembly obtained in step (iii) while the mixture is still wet,
(v) optionally hardening the assembly obtained in step (iv).

16. A tiled surface, especially as part of a building, obtained in a method as claimed in claim 15.
